# EUROPÄISCHE PATENTSCHRIFT

(11) **EP 0 593 944 B1**
(45) Veröffentlichungstag und Bekanntmachung des Hinweises auf die Patenterteilung: **17.01.1996**
(21) Anmeldenummer: 93115530.3
(22) Anmeldetag: 25.09.1993
(51) Int. Cl.: D21F 5/00

(54) **Walzenmaschine mit einer Schutzvorrichtung**
Roller machine with a protection device
Machine à cylindres avec un dispositif de sécurité

(30) Priorität: 21.10.1992 DE 4235421
(43) Veröffentlichungstag der Anmeldung: 27.04.1994
(73) Patentinhaber: Voith Sulzer Finishing GmbH, D-47803 Krefeld (DE)
(72) Erfinder: Conrad, Hans-Rolf, Dipl.-Ing. TH, D-41539 Dormagen (DE); Autrata, Jochen, Dipl.-Ing., D-47198 Duisburg (DE); Hille, Albrecht, Dr. Dipl.-Ing., D-52076 Aachen (DE)
(74) Vertreter: Knoblauch, Ulrich, Dr.-Ing.

(56) Entgegenhaltungen:
- DE-A- 3 124 330
- DE-C- 3 024 917
- DE-C- 3 719 305
- DE-C- 4 030 150
- Kempe's Engineers Yearbook, 1987, Kapitel B4, Seiten 39-45

## Beschreibung

Die Erfindung betrifft eine Walzenmaschine mit einem Walzenspalt und einer Schutzvorrichtung für den Walzenspalt, die eine vor dem Walzenspalt und im wesentlichen parallel dazu angeordneten Traverse aufweist.

Eine derartige Schutzvorrichtung ist aus DE 37 19 305 C1 bekannt. Die Traverse besteht hierbei aus einem Träger, an dem Schutzleisten angeordnet sind, die den einzelnen, den Walzenspalt bildenden Walzen bis auf einen Sicherheitsabstand angenähert werden können, um den Forderungen der Berufsgenossenschaft zu entsprechen. Danach darf der Spalt zwischen der Schutzvorrichtung und den den Walzenspalt begrenzenden Walzen 8 mm nicht überschreiten.

Die Leisten müssen am Träger nicht unbedingt beweglich sein. Sie können, wie dies beispielsweise aus DE 40 30 150 C1 bekannt ist, auch fest am Träger angeordnet sein oder sogar einen integralen Bestandteil des Trägers bilden.

Schutzwinkel der bekannten Art neigen beim Hochlaufen der Walzenmaschine oder sogar während des Betriebs zu unerwünschten Schwingungen, wenn die Drehfrequenz der Walzen mit der Eigenfrequenz der Schutzvorrichtung übereinstimmt. Dabei können die Schwingungsamplituden in der Mitte der Traverse durchaus Größen von 10 mm oder mehr betragen. Um eine Berührung mit den Walzen zu vermeiden, muß deshalb der von der Berufsgenossenschaft vorgeschriebene Sicherheitsspalt von 8 mm vergrößert werden, was zu Problemen mit der Arbeitssicherheit führt.

Der Erfindung liegt die Aufgabe zugrunde, die Schutzwirkung einer Schutzvorrichtung zu verbessern.

Diese Aufgabe wird bei einer Walzenmaschine der eingangs genannten Art dadurch gelöst, daß die Traverse an beiden Enden mit der Walzenmaschine verbunden ist und daß an der Traverse eine zusätzliche Masse befestigt ist, die mit der Traverse über ein Federelement verbunden ist.

Die Masse ist also am Träger oder einem damit verbundenen Teil schwingungsfähig aufgehängt. Damit wird aus dem bisherigen Ein-Massen-Schwinger der Schutzvorrichtung ein Zwei-Massen-Schwinger. Bei geeigneter Dimensionierung des Federelements und der Masse kann man erreichen, daß die Bewegung der zusätzlichen Masse in den kritischen Frequenzen zu einem Kräftegleichgewicht an der Traverse führt. Der Anregungskraft wird eine etwa gleich große Kraft entgegengesetzt. Damit lassen sich die Auslenkungsamplituden der Traverse beträchtlich vermindern. Die Traverse kann damit so dicht an den Walzen angeordnet sein, daß die geforderte Mindestgröße des Spalts zwischen der Schutzvorrichtung und der betreffenden Walze eingehalten werden kann, ohne daß bei Schwingungen der Traverse eine Berührung der Walze mit der Schutzvorrichtung erfolgt. Das Federelement kann auch durch die Befestigung der Masse an der Traverse gebildet sein.

Ein dynamischer Schwingungsdämpfer, bei dem eine zusätzliche Masse an einer schwingenden Maschine befestigt ist, ist aus Kempe's Engineers Yearbook, 1987, Kapitel B4, Seiten 39 - 45 bekannt.

Hierbei ist bevorzugt, daß die Masse auch über ein Dämpferelement mit der Traverse verbunden ist. Durch das Hinzufügen der zusätzlichen schwingungsfähig angeordneten Masse entstehen neue Resonanzfrequenzen, die gegebenenfalls auch im Betriebsbereich der Walzenmaschine liegen können. Die Bewegungen der Traverse und damit der Schutzvorrichtung an diesen durch die Ausbildung als Zwei-Massen-Schwinger neu entstandenen Resonanzstellen lassen sich mit Hilfe des Dämpferelements wirksam reduzieren.

Mit Vorteil sind Federelement und Dämpferelement parallelgeschaltet. Dies vermindert die Bauhöhe, wodurch sich ein kompakter Aufbau erzielen läßt.

Auch ist von Vorteil, wenn die Masse an einer linearen Führung verschiebbar gelagert ist. Hiermit wird eine Schwingungsrichtung festgelegt. Dies vereinfacht die Auslegung und Berechnung. Außerdem kann man auf diese Art vermeiden, daß über die zusätzliche Masse Schwingungen in anderen, nicht gewünschten Richtungen, angeregt werden.

Hierbei ist bevorzugt, daß die Führung in Richtung der größten Auslenkung der Traverse ausgerichtet ist. Diese Richtung ist im allgemeinen die Richtung mit der geringsten Steifigkeit der Traverse. In Einzelfällen kann sie jedoch beispielsweise anregungsbedingt davon abweichen. Die Richtung der größten Auslenkung kann man an der ungedämpften Traverse ermitteln und die Führung entsprechend einrichten.

Vorteilhafterweise besteht das Federelement aus zwei Teilen, die die Masse zwischen sich aufnehmen. Die Masse ist also, wenn sie sich nicht in ihrer Ruhelage befindet, immer gleichzeitig von einer Zugkraft und einer Druckkraft belastet. Etwaige Abweichungen in den Charakteristiken der Federteile bei einer Zug- und bei einer Druckbeanspruchung werden hierdurch ausgeglichen. Außerdem läßt sich der für die Bewegung der Masse notwendige Raum einfacher gestalten.

Auch hat sich als vorteilhaft erwiesen, daß die Vorspannung der Feder, insbesondere von außen, einstellbar ist. Durch die Veränderung der Vorspannung der Feder läßt sich die Schwingungscharakteristik des Zwei-Massen-Schwingers verändern. Sie kann damit auch im eingebauten Zustand der zusätzlichen Masse an die speziellen Bedingungen der einzelnen Walzenmaschine angepaßt werden.

Entsprechend ist von Vorteil, wenn die Größe der Masse, insbesondere im eingebauten Zustand, veränderbar ist.

Vorteilhafterweise entspricht die Eigenfrequenz eines aus Masse und Federelement gebildeten Tilgersystems der Eigenfrequenz der Traverse. In diesem Fall werden die besten Dämpfungen, also die kleinsten Amplituden, der Vorrichtung beobachtet.

Auch ist von Vorteil, daß die Masse in einem in die Traverse einschiebbaren Rahmen angeordnet ist. Die Masse kann in diesem Rahmen schwingungsfähig und gegebenenfalls gedämpft aufgehängt sein. Alle zur Dämpfung der Schwingungen der Traverse notwendigen Teile können außerhalb der Traverse zusammengebaut werden. Sie müssen dann nur noch in die Traverse, die in vielen Fällen ohnehin ein Hohlprofil aufweist, eingesetzt werden.

Bevorzugterweise wird die Masse auf mehrere Teilmassen aufgeteilt. Wenn es aus Platzgründen nicht möglich ist, eine einzige Masse zu verwenden, können auch zwei oder mehr Massen verwendet werden, die dann parallel zueinander schwingen. Man kann hierdurch sehr kompakte Einheiten verwenden.

Auch ist bevorzugt, daß die Masse im Bereich der axialen Mitte der Traverse und im wesentlichen symmetrisch dazu angeordnet ist. In diesem Bereich treten die größten Auslenkungen auf. Hier ist somit auch die Dämpfungswirkung am besten.

Die Erfindung wird im folgenden anhand eines bevorzugten Ausführungsbeispiels in Verbindung mit der Zeichnung beschrieben. Hierin zeigen:
- Fig. 1: eine Draufsicht auf eine Schutzvorrichtung,
- Fig. 2: einen Schnitt II-II nach Fig. 1 im vergrößerten Maßstab,
- Fig. 3: ein Tilgersystem und
- Fig. 4: einen Schnitt IV-IV nach Fig. 3.

Eine Schutzvorrichtung 1 besteht im wesentlichen aus einer Traverse, die vor und im wesentlichen parallel zu einem Walzenspalt 2 angeordnet ist, der durch zwei Walzen 3, 4 gebildet ist. Die Traverse weist einen Träger 5 auf, an dem zwei Schutzleisten 6, 7 angeordnet sind. Im vorliegenden Fall ist dargestellt, daß die Schutzleisten 6, 7 fest mit dem Träger 5 verbunden sind. Sie können jedoch auch in üblicher Weise beweglich mit dem Träger 5 verbunden sein.

Der Träger 5 ist an seinen beiden Enden an hierfür vorgesehenen Vorsprüngen aufgehängt oder abgestützt, beispielsweise in einer nicht näher dargestellten Stuhlung, die auch die Walzen 3, 4 trägt.

Zwischen der Walze 3 und der Schutzleiste 6 bzw. zwischen der Walze 4 und der Schutzleiste 7 befindliche Spalte 9, 10 dürfen im Betrieb eine Größe von 8 mm nicht überschreiten, um eine Gefährdung von Bedienungspersonen auszuschließen. Beim Anfahren der Walzenmaschine, die die Walzen 3, 4 aufweist, entstehen jedoch Schwingungen, die sich auf die Traverse 5, 6, 7 übertragen und diese ihrerseits zu Schwingungen anregen können. Die Bewegung der Traverse 5, 6,7 im Raum läßt sich zerlegen in Bewegungen in zwei senkrecht aufeinanderstehenden Richtungen, die durch die Doppelpfeile 11, 12 dargestellt sind. Hierbei treten in der Richtung 11 die größten Amplituden auf. In der Richtung 12 finden sich hingegen nur relativ kleine Amplituden, die vernachlässigbar sind. In der durch den Doppelpfeil 11 gekennzeichneten Richtung hat die Traverse 5, 6, 7 ihre geringste Biegesteifigkeit.

Die Schwingungsamplitude der Traverse 5, 6, 7 kann durchaus eine Größe von 10 mm überschreiten. Dies ist zwar für den Spalt 9 nicht so kritisch. Es liegt jedoch auf der Hand, daß bei einer derart großen Bewegung ein Kontakt zwischen der Schutzleiste 7 und der Walze 4 erfolgen wird, da der Spalt 10 nur eine Größe von 8 mm haben soll. Bei Kalandern oder anderen Walzenmaschinen ist der um die Walzen herum zur Verfügung stehende Raum in der Regel sehr begrenzt, so daß die Schutzvorrichtung 1 nicht von außen abgestützt oder gedämpft werden kann.

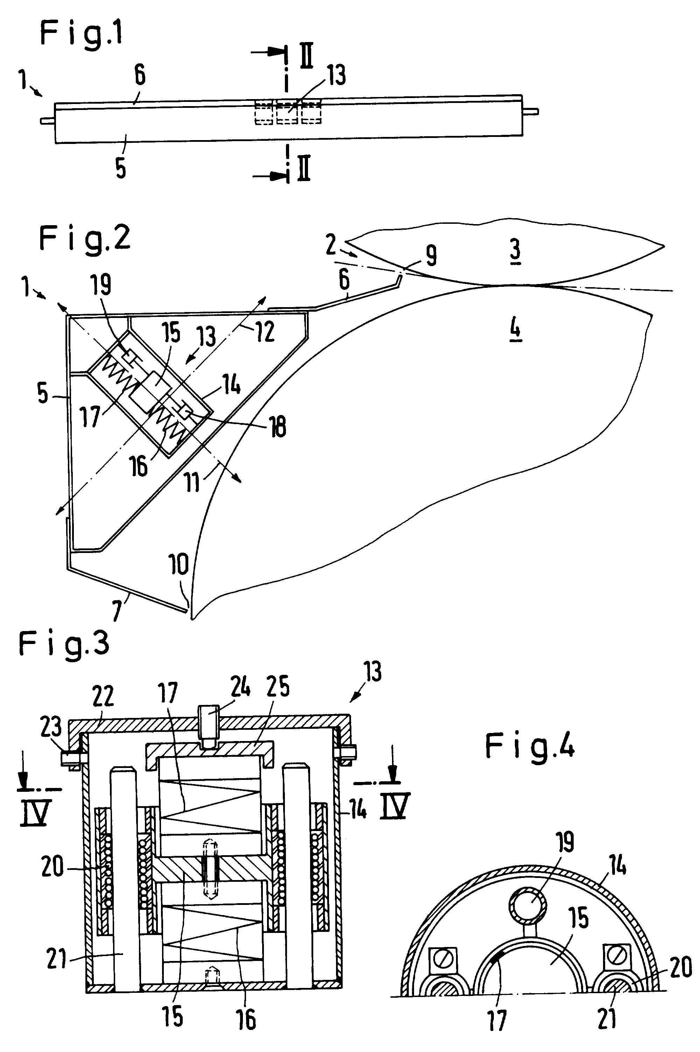

Zur Verminderung der Schwingungsamplitude ist in die Traverse 5 ein Tilgersystem 13 eingeschoben. Wie in Fig. 1 dargestellt, können auch mehrere Tilgersysteme 13 in den Träger 5 eingeschoben werden. Sie sollten dann im Bereich der Mittelachse der Traverse und symmetrisch dazu angeordnet sein.

Jedes Tilgersystem 13 weist einen Rahmen oder ein Gehäuse 14 auf, das fest mit dem Träger 5 verbunden ist. Eine Masse 15 ist mit Hilfe von zwei Federn 16, 17 schwingungsfähig im Rahmen 14 und damit im Träger 5 aufgehängt. Parallel zu den Federn 16, 17 sind Dämpfungselemente 18, 19 angeordnet, also ebenfalls zwischen Masse 15 und Rahmen 14 des Tilgersystems 13. Federn 16, 17 und Dämpfungselemente 18, 19 sind hier lediglich schematisch dargestellt. Es können alle Arten von Federn verwendet werden, beispielsweise Spiral- oder Schraubenfedern aus Metall oder Kunststoff, Blattfedern, Tellerfedern oder ähnliches. Die Dämpferelemente 18, 19 können als hydraulische Dämpfer ausgebildet sein. Andere Dämpfungsmöglichkeiten, wie beispielsweise Reibung, sind ebenfalls möglich. Auch können die Federn 16, 17 mit den Dämpfungselementen 18, 19 integriert ausgebildet sein. Wesentlich ist lediglich, daß die Masse 15 schwingungsfähig aufgehängt ist, wobei die Schwingung gedämpft ist. Die Eigenfrequenz des Tilgersystems 13 stimmt mit der Eigenfrequenz der Traverse 5, 6, 7 überein. Die Dämpfung durch die Dämpfungselemente 18, 19 ist so abgestimmt, daß die durch den durch die Masse 15 einerseits und die Traverse 5, 6, 7 und den damit fest verbundenen Teilen andererseits gebildeten Zwei-Massen-Schwinger neu entstandenen Resonanzstellen wirksam gedämpft werden. Die Schwingungsamplituden an diesen Stellen lassen sich damit sehr klein halten.

Der innere Aufbau eines Tilgersystems 13 ist schematisch in den Fig. 3 und 4 dargestellt. Die Masse 15 ist mit Hilfe von Kugelbüchsen 20 an Führungen 21 geführt, die im Rahmen 14 des Tilgersystems 13 festgelegt sind. Das Tilgersystem 13 wird im Träger 5 so montiert, daß die Führungen 21 parallel zur Richtung des Doppelpfeils 11 angeordnet sind. Die Kugelführungen 20 vermindern die Reibung auf den Führungen 21, so daß durch die Reibung keine zusätzliche unerwünschte Dämpfung erzeugt wird und die Dämpfung alleine in Abhängigkeit von den Eigenschaften der Dämpferelemente 18, 19 erfolgt. Die Führungen 21 erlauben eine Bewegung der Masse 15, zu der natürlich auch noch das Gewicht oder die Masse der daran befestigen Teile hinzugerechnet werden muß, nur in einer vorbestimmten Richtung, nämlich in Richtung des Doppelpfeiles 11, d.h. der Richtung der größten Auslenkung der ungedämpften Traverse 5, 6, 7.

Jedes Dämpferelement 18, 19 ist noch einmal in zwei Dämpfer aufgeteilt, von denen einer vor der und der andere hinter der in Fig. 3 dargestellten Ebene angeordnet ist. Dies geht schematisch aus Fig. 4 hervor. Die Dämpfung kann auch auf andere Weise bewirkt werden. Beispielsweise kann ein Dämpfungskissen, z.B. aus Drahtgeflecht, innerhalb einer Schraubenfeder angeordnet werden.

Der Rahmen 14 ist mit einem Deckel 22 verschlossen, der mit Hilfe von Schrauben 23 fest am Rahmen 14 gehalten ist. Im Deckel 22 ist eine Einstellschraube 24 angeordnet, mit deren Hilfe die Position einer Druckplatte 25 verändert werden kann. Die Druckplatte erzeugt zusammen mit dem Boden des Rahmens 14 eine Vorspannung der Federn 16, 17. Durch Verstellen der Einstellschraube 24 läßt sich damit auch die Vorspannung der Federn 16, 17 verändern. Die Resonanzfrequenz des Tilgersystems 13 läßt sich damit noch in gewissen Grenzen verändern. Die Einstellschraube 24 ist auch im eingebauten Zustand des Tilgersystems 13 von außen zugänglich. Hierdurch läßt sich die Eigenfrequenz des Tilgersystems der Eigenfrequenz der Traverse auch noch vor Ort anpassen. In nicht dargestellter Weise ist die Größe der Masse 15 durch Hinzufügen oder Wegnehmen von Zusatzelementen veränderbar.

In Versuchen wurde eine Traverse mit einer Länge von 7600 mm und einer Masse von etwa 200 kg über eine rotierende Exzenterscheibe (Unwucht = 12000 gmm) in ihrer Eigenfrequenz (6,875 Hz) angeregt.

Ohne die zusätzliche schwingende Masse waren Schwingungsgeschwindigkeiten bis zu 156 mm/s und Schwingungsamplituden von etwa 11 mm zu beobachten. Durch Einsatz des Tilgersystems 13 reduzierte sich die Geschwindigkeit auf 32 mm/s und die Amplitude auf ca. 2,5 mm.

Auch das Ausschwingverhalten der Traverse 5, 6, 7 wurde beträchtlich verbessert. Nach einem manuellen Anstoßen auf eine Schwingungsgeschwindigkeit von ±40 mm/s nahm die Schwingungsgeschwindigkeit ohne Tilgersystem 13 relativ langsam ab, während sie sich bei Einsatz des Tilgersystems 13 fast sprungartig verminderte. Nach 0,4 s waren ohne Tilgersystem 13 noch Geschwindigkeiten von ±35 mm/s zu beobachten, während das Tilgersystem 13 den Wert auf ±7 mm/s verminderte.

Durch den Einbau einer zusätzlichen Masse kann die Schwingungsamplitude im Resonanzbereich beträchtlich reduziert werden, im Beispielsfall auf etwa 1/4. Damit läßt sich der geforderte Sicherheitsspalt mit einer größeren Genauigkeit einhalten.

## Patentansprüche

1. Walzenmaschine mit einem Walzenspalt (2) und einer Schutzvorrichtung für den Walzenspalt die Traverse (5, 6, 7) an beiden Enden mit der Walzenmaschine verbunden ist und daß die eine vor dem Walzenspalt und im wesentlichen parallel dazu angeordneten Traverse (5, 6, 7) aufweist, dadurch gekennzeichnet, daß die Traverse (5, 6, 7) an beiden Enden mit der Walzenmaschine verbunden ist und daß an der Traverse (5, 6, 7) eine zusätzliche Masse (15) befestigt ist, die mit der Traverse (5, 6, 7) über ein Federelement (16, 17) verbunden ist.

2. Walzenmaschine nach Anspruch 1, dadurch gekennzeichnet, daß daß die Masse (15) auch über ein Dämpferelement (18, 19) mit der Traverse (5, 6, 7) verbunden ist.

3. Walzenmaschine nach Anspruch 2, dadurch gekennzeichnet, daß Federelement (16, 17) und Dämpferelement (18, 19) parallelgeschaltet sind.

4. Walzenmaschine nach einem der Ansprüche 1 bis 3, dadurch gekennzeichnet, daß die Masse (15) an einer linearen Führung (21) verschiebbar gelagert ist.

5. Walzenmaschine nach Anspruch 4, dadurch gekennzeichnet, daß die Führung (21) in Richtung (11) der größten Auslenkung der Traverse (5, 6, 7) ausgerichtet ist.

6. Walzenmaschine nach einem der Ansprüche 1 bis 5, dadurch gekennzeichnet, daß das Federelement (16, 17) aus zwei Teilen besteht, die die Masse (15) zwischen sich aufnehmen.

7. Walzenmaschine nach einem der Ansprüche 1 bis 6, dadurch gekennzeichnet, daß die Vorspannung des Federelements (16, 17), insbesondere von außen, einstellbar ist.

8. Walzenmaschine nach einem der Ansprüche 1 bis 7, dadurch gekennzeichnet, daß die Größe der Masse (15), insbesondere von außen, veränderbar ist.

9. Walzenmaschine nach einem der Ansprüche 1 bis 8, dadurch gekennzeichnet, daß daß die Eigenfrequenz eines aus Masse (15) und Federelement (16, 17) gebildeten Tilgersystems (13) der Eigenfrequenz der Traverse (5, 6, 7) entspricht.

10. Walzenmaschine nach einem der Ansprüche 1 bis 9, dadurch gekennzeichnet, daß die Masse (15) in einem in die Traverse (5, 6, 7) einschiebbaren Rahmen (14) angeordnet ist.

11. Walzenmaschine nach einem der Ansprüche 1 bis 10, dadurch gekennzeichnet, daß die Masse (15) auf mehrere Teilmassen aufgeteilt ist.

12. Walzenmaschine nach einem der Ansprüche 1 bis 11, dadurch gekennzeichnet, daß die Masse (15) im Bereich der axialen Mitte der Traverse (5, 6, 7) und im wesentlichen symmetrisch dazu angeordnet ist.

## Claims

1. Rolling machine with a nip (2) and a safety device for the nip (2) having a traverse (5, 6, 7) arranged in front of the nip and substantially parallel thereto, characterised in that the traverse (5, 6, 7) is connected to the rolling machine at either end and that an additional weight (15) is secured to the traverse (5, 6, 7), the additional weight being connected to the traverse (5, 6, 7) via a spring element (16, 17).

2. Rolling machine according to claim 1, characterised in that the weight (15) is also connected to the traverse (5, 6, 7) via a damping element (18, 19).

3. Rolling machine according to claim 2, characterised in that the spring element (16, 17) and the damping element (18, 19) are connected in parallel.

4. Rolling machine according to one of claims 1 to 3, characterised in that the weight (15) is displaceably supported on a linear guide (21).

5. Rolling machine according to claim 4, characterised in that the guide (21) is aligned in the direction (11) of the greatest deflection of the traverse (5, 6, 7).

6. Rolling machine according to one of claims 1 to 5, characterised in that the spring element (16, 17) consists of two parts which between them receive the weight (15).

7. Rolling machine according to one of claims 1 to 6, characterised in that the pretensioning of the spring element (16, 17) is adjustable, in particular from the outside.

8. Rolling machine according to one of claims 1 to 7, characterised in that the magnitude of the weight (15) is variable, in particular from the outside.

9. Rolling machine according to one of claims 1 to 8, characterised in that the natural frequency of an absorption system (13) consisting of the weight (15) and the spring element (16, 17) corresponds to the natural frequency of the traverse (5, 6, 7).

10. Rolling machine according to one of claims 1 to 9, characterised in that the weight (15) is arranged in a frame (14) which can be inserted into the traverse (5, 6, 7).

11. Rolling machine according to one of claims 1 to 10, characterised in that the weight (15) is divided into several partial weights.

12. Rolling machine according to one of claims 1 to 11, characterised in that the weight (15) is arranged in the region of the axial centre of the traverse (5, 6, 7) and substantially symmetrically thereto.

## Revendications

1. Machine à cylindres présentant un interstice de cylindres (2) et un dispositif de sécurité pour l'interstice de cylindres (2), qui comprend une traverse (5, 6, 7) disposée devant l'interstice de cylindres et de manière sensiblement parallèle à celui-ci, caractérisée en ce que la traverse (5, 6, 7) est reliée, aux deux extrémités, à la machine à cylindres, et en ce que sur la traverse (5, 6, 7) est fixée une masse supplémentaire (15), qui est reliée à la traverse (5, 6, 7) par l'intermédiaire d'un élément formant ressort (16, 17 ) .

2. Machine à cylindres selon la revendication 1, caractérisée en ce que la masse (15) est également reliée à la traverse (5, 6, 7) par l'intermédiaire d'un élément formant amortisseur (18, 19).

3. Machine à cylindres selon la revendication 2, caractérisée en ce que l'élément formant ressort (16, 17) et l'élément formant amortisseur (18, 19) sont montés en parallèle.

4. Machine à cylindres selon l'une des revendications 1 à 3, caractérisée en ce que la masse (15) est montée de manière à pouvoir coulisser dans un guidage linéaire (21).

5. Machine à cylindres selon la revendication 4, caractérisée en ce que le guidage (21) est orienté dans la direction (11) du plus grand débattement de la traverse (5, 6, 7).

6. Machine à cylindres selon l'une des revendications 1 à 5, caractérisée en ce que l'élément formant ressort (16, 17) est constitué de deux parties recevant entre-elles la masse (15),

7. Machine à cylindres selon l'une des revendications 1 à 6, caractérisée en ce que la précontrainte de l'élément formant ressort (16, 17) est réglable, notamment à partir de l'extérieur.

8. Machine à cylindres selon l'une des revendications 1 à 7, caractérisée en ce que la grandeur de la masse (15) peut être modifiée, notamment à partir de l'extérieur.

9. Machine à cylindres selon l'une des revendications 1 à 8, caractérisée en ce que la fréquence propre d'un système d'amortissement (13) formé de la masse (15) et de l'élément formant ressort (16, 17) correspond à la fréquence propre de la traverse (5, 6, 7).

10. Machine à cylindres selon l'une des revendications 1 à 9, caractérisée en ce que la masse (15) est disposée dans un cadre (14) pouvant être glissé dans la traverse (5, 6, 7).

11. Machine à cylindres selon l'une des revendications 1 à 10, caractérisée en ce que la masse (15) est répartie en plusieurs masses partielles.

12. Machine à cylindres selon l'une des revendications 1 à 11, caractérisée en ce que la masse (15) est disposée dans la zone du centre axial de la traverse (5, 6, 7), et de manière sensiblement symétrique par rapport à celui-ci.
